# EUROPEAN PATENT APPLICATION

(11) **EP 2 408 090 A2**
(43) Date of publication of application: **18.01.2012**
(21) Application number: 11173575.9
(22) Date of filing: 12.07.2011
(51) Int. Cl.: H02K 3/34, H02K 7/14

(54) **Electric motor**

(30) Priority: 14.07.2010 JP 2010159913
(71) Applicant: Makita Corporation, Anjo, Aichi 446-8502 (JP)
(72) Inventor: Murase, Hiroshi, Anjo, Aichi 446-8502 (JP); Okudaira, Ken, Anjo, Aichi 446-8502 (JP); Kawai, Koji, Anjo, Aichi 446-8502 (JP)
(74) Representative: Kramer - Barske - Schmidtchen

(57) **Abstract**

It is an object of the invention to secure an insulation distance between a stator and a rotor without reducing a region of a slot of a stator core in which a winding is installed.

The representative electric motor includes a cylindrical stator core 131 fixed to a motor housing, a rotor 120 rotatably housed within a housing part 132 in a bore of the stator core 131, pole pieces 133, 134 extending from an inner wall 131a of the stator core 131, rotor opposed surfaces 133a, 134a of the pole pieces 133, 134 which are opposed to the rotor 120, inner-wall opposed surfaces 133b, 134b of the pole pieces 133, 134 which are formed on a side opposite to the rotor opposed surfaces 133a, 134a and opposed to the inner wall 131a of the stator core 131, a slot 135 which is defined between the inner wall 131a of the stator core 131 and the inner-wall opposed surfaces 133b, 134b of the pole pieces 133, 134 and in which the winding 137 is installed, a first insulating sheet 141 which is disposed in the slot 135 and insulates the winding 137 from the stator core 131, a space 138 which is defined between the slot 135 with the winding 137 installed therein and the housing part 132 with the rotor 120 housed therein, and a second insulating sheet 142 which is disposed in the space 138 and insulates the winding 137 from the rotor 120.

## Description

### BACKGROUND OF THE INVENTION

### Field of the Invention

The invention relates to an electric motor for electric equipment.

### Description of the Related Art

In an electric motor to be installed in various kinds of electric equipment, or particularly, an inner-rotor type electric motor, it is necessary to secure a predetermined insulation distance between a stator and a rotor according to requirements of motor specifications. In this connection, Japanese non-examined laid-open Patent Publication H05 (1993)-276704 discloses an electric motor in which a winding is disposed in a slot of a stator core and in which an insulation distance is secured between a winding and a rotor by inserting a nonmagnetic wedge into a region of a slot.

In such a known electric motor, by provision of the nonmagnetic wedge disposed in part of the slot, an insulation distance is secured between a winding and a rotor on one hand. On the other hand, a winding installation region for installing a winding in the slot is reduced. Therefore, in designing an electric motor of this type, it is desired to alleviate such reduction of a winding installation region in a slot while securing an insulation distance between a stator and a rotor.

### SUMMARY OF THE INVENTION

Accordingly, it is an object of the invention to secure an insulation distance between a stator and a rotor without reducing a region of a slot of a stator core in which a winding is installed.

Above described object is achieved by the claimed invention. According to an aspect of the invention, a representative electric motor is provided to include at least a stator core, a rotor, pole pieces, rotator opposed surfaces, inner-wall opposed surfaces, a slot, a first insulating sheet, a space, and a second insulating sheet.

The stator core is configured as a cylindrical core part fixed to a motor housing. The motor housing serves as a housing for housing component elements of the electric motor, and it may be designed as a housing part to be used singly for the electric motor, or a housing part on the electric equipment side may also serve as the motor housing. The rotor is configured as a rotor part rotatably housed within a housing part in a bore of the stator core. The pole pieces extend from an inner wall of the stator core. Opposed surfaces of the pole pieces which are opposed to the rotor are defined as the rotor opposed surfaces, and opposed surfaces of the pole pieces which are formed on a side opposite to the rotor opposed surfaces and opposed to the inner wall of the stator core are defined as the inner-wall opposed surfaces. The slot is configured as a winding installation region which is defined between the inner wall of the stator core and the inner-wall opposed surfaces of the pole pieces and in which the winding is installed. The first insulating sheet is disposed in the slot and insulates the winding from the stator core. The space is defined between the slot with the winding installed therein and the housing part with the rotor housed therein. The second insulating sheet is disposed in the space and insulates the winding from the rotor. The second insulating sheet may be formed as a sheet separate from the first insulating sheet, or it may be integrally formed with first insulating sheet.

With the above-described construction, in order to secure an insulation distance between the winding in the slot and the rotor housed within the housing part of the stator core, the second insulating sheet is disposed in the space such that no part of the second insulating sheet is disposed in the slot. Therefore, decrease of a region of the slot in which the winding can be installed can be prevented. In this manner, the winding can be installed in the entire region of the slot. Thus, compared with the construction, for example, in which the second insulating sheet is disposed in the slot, this construction can be effective in providing a higher-powered (higher specification) electric motor by installing the winding in a region of the slot which is occupied by the second insulating sheet in the comparative example. Further, if the same amount of the winding is used, this construction can be effective in reducing the size and weight of the electric motor by reducing the capacity of the slot.

In a preferred embodiment of the electric motor according to this invention, the first and second insulating sheets are formed as separate sheet members. With this construction, the second insulating sheet in the form of the second sheet member can be retrofitted, which is advantageous in manufacturing.

Further, in a preferred embodiment of the electric motor according to this invention, the first insulating sheet in the form of the first sheet member is wrapped around the winding in the slot, and in this state, ends of the first sheet member protrude in such a manner as to face the space, and the second insulating sheet in the form of the second sheet member is bonded to sides of the ends of the first sheet member which face the space. With this construction, the structure of the stator can be made simpler by using the existing first sheet member as a joint of the second sheet member.

Further, in a preferred embodiment of the electric motor according to this invention, a recess is formed in the rotor opposed surface of each of the pole pieces and forms part of the space, and the second insulating sheet in the form of the second sheet member is bonded to the recess. With this construction, the structure of the stator can be made simpler by using the existing pole pieces as a joint of the second sheet member.

Further, in a preferred embodiment of the electric motor according to this invention, the second sheet member includes a thermal fusion bonding layer for bonding. With this construction, the second sheet member can be easily bonded to the first insulating sheet or the pole pieces by thermal fusion bonding.

According to the invention, an insulation distance can be ensured between a stator and a rotor without reducing a region of a slot of a stator core in which a winding is installed, in an electric motor to be installed in electric equipment. Other objects, features and advantages of the present invention will be readily understood after reading the following detailed description together with the accompanying drawings and the claims.

### BRIEF DESCRIPTION OF THE DRAWINGS

FIG. 1 is a side view, partly in section, showing the entire construction of an electric disc grinder 101 according to an embodiment of the invention.
FIG. 2 is a perspective view schematically showing a stator 130 of an electric motor 110 shown in FIG. 1.
FIG. 3 shows the sectional structure of the stator 130 shown in FIG. 2.
FIG. 4 shows the sectional structure of a stator 230 of another embodiment.

### DETAILED DESCRIPTION OF THE INVENTION

Each of the additional features and method steps disclosed above and below may be utilized separately or in conjunction with other features and method steps to provide and manufacture improved electric motors and method for using such electric motors and devices utilized therein. Representative examples of the present invention, which examples utilized many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.
The construction of an electric motor according to this invention is now described with reference to the drawings. In an embodiment of this invention, an electric motor according to this s invention is explained as being applied to an electric motor which is installed in a hand-held electric disc grinder for use in polishing or grinding various kinds of workpiece such as metal, concrete and stone, as a representative example of a power tool.

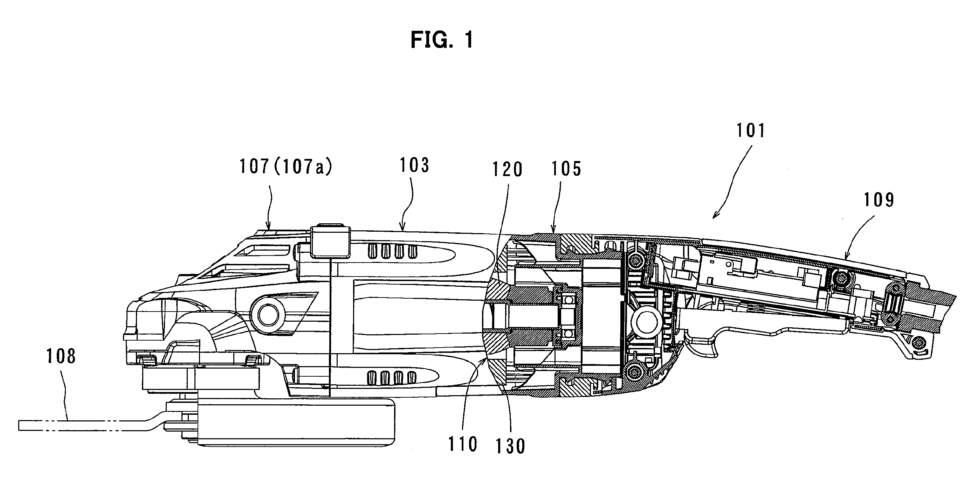

FIG. 1 shows the entire construction of an electric disc grinder 101 (hereinafter referred to as a grinder) according to this embodiment. The electric disc grinder 101 has a tool body in the form of a body 103 which includes a motor housing 105 and a gear housing 107, and the body 103 forms an outer shell of the electric disc grinder 101. In FIG. 1, the longitudinal direction of the body 103 is taken as the fore-and-aft direction (horizontal direction in FIG. 1) of the grinder 101, and the left side in FIG. 1 is taken as the front of the grinder 101 and the right side is taken as the rear of the grinder 101.

The motor housing 105 is generally cylindrically shaped and an electric motor 110 is housed within a housing space of the motor housing 105. Specifically, the motor housing 105 forms an outer shell ofthe electric motor 110. The motor housing 105 is a feature that corresponds to the "motor housing" according to this invention. Further, the electric motor 110, or a combination of the electric motor 110 and the motor housing 105 forms the "electric motor" according to this invention. The electric motor 110 is an AC commutator motor, and includes a rotor 120 which is rotatably disposed within the motor housing 105, and a stator 130 which is fixed within the motor housing 105. The electric motor 110 is arranged such that the direction of the axis of rotation of the rotor 120 coincides with the fore-and-aft direction of the grinder 101 or the longitudinal direction of the body 103.

A power transmitting mechanism 107a for transmitting a rotating output of the electric motor 110 to a grinding wheel 108 is housed within the gear housing 107 which is connected to a front end of the motor housing 105. The rotating output of the electric motor 110 is transmitted to the grinding wheel 108 as rotation in the circumferential direction via the power transmitting mechanism 107a. Therefore, the electric motor 110 is also referred to as a driving motor for driving the grinding wheel 108. The grinding wheel 108 is disposed on one end (front end) of the body 103 in the longitudinal direction such that its axis of rotation is perpendicular to the longitudinal direction of the body 103 (to the axis of rotation of the electric motor 110).

Further, a main handle 109 is connected to the other end (rear end) of the motor housing 105. The main handle 109 is disposed such that its longitudinal direction coincides with the longitudinal direction of the body 103. Specifically, the main handle 109 extends substantially linearly in the longitudinal direction of the body 103. Although not shown, in the case of a large disc grinder 101, in addition to the main handle 109, a detachable auxiliary handle can be provided on a side or top of the gear housing 107. The auxiliary handle is disposed such that its longitudinal direction is substantially perpendicular to the longitudinal direction of the body 103. The user can hold the main handle 109 or both the main handle 109 and the auxiliary handle by hand and perform grinding or cutting operation on a workpiece by rotationally driving the grinding wheel 108.

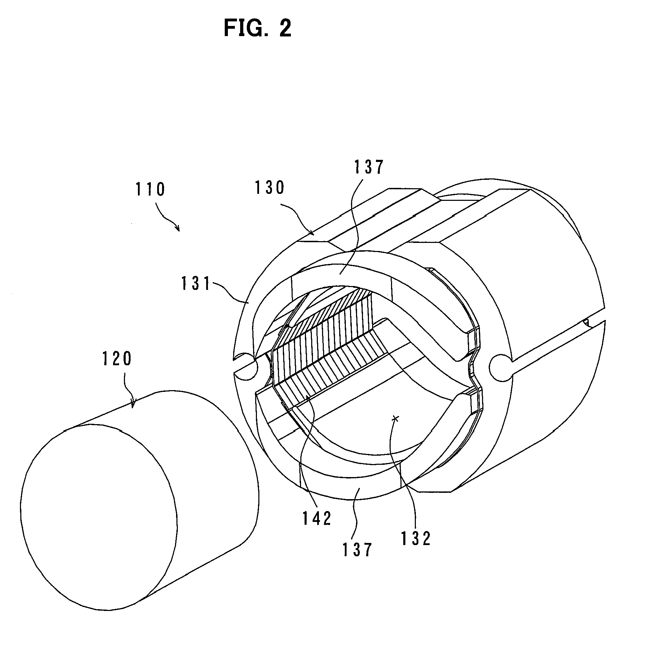

FIG. 2 is a perspective view showing the stator 130 of the electric motor 110 shown in FIG. 1. As shown in FIG. 2, the stator 130 includes a cylindrical stator core 131 which forms an outer shell of the stator 130, and a housing part 132 defined within the bore of the stator core 131. The rotor 120 is rotatably housed within the housing part 132. Specifically, the electric motor 110 is designed as a so-called "inner-rotor type" electric motor in which the rotor 120 is housed in the inside and a winding on the stator 130 is arranged on the outside. The rotor 120, the stator core 131 and the housing part 132 are features that correspond to the "rotor", the "stator core" and the "housing part", respectively, according to this invention.

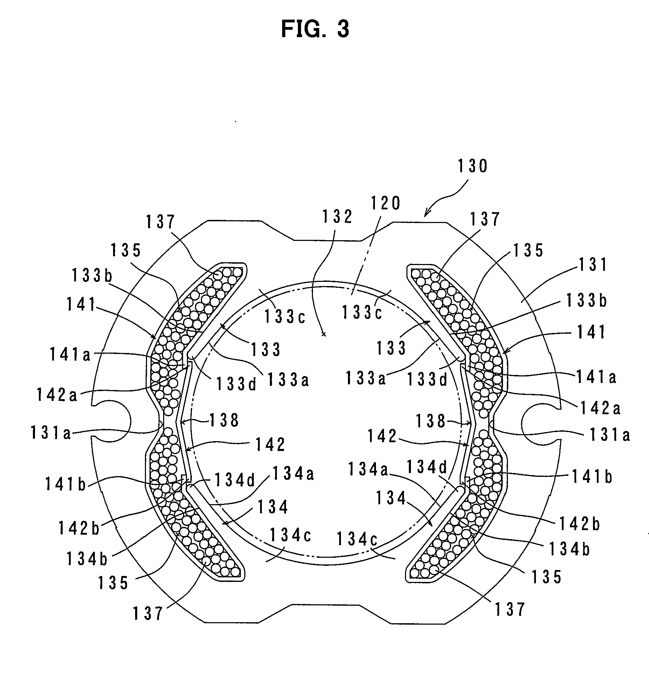

The specific construction of the stator is described with reference to FIG. 3 which shows the sectional structure of the stator 130 shown in FIG. 2. As shown in FIG. 3, the stator 130 includes a pair of pole pieces which protrude from an inner wall 131a of the stator core 131 away from each other. In the embodiment shown in FIG. 3, as the pair pole pieces, two pairs of pole pieces 133 and 134 are provided. The pole pieces 133 and 134 are features that correspond to the "pole pieces" according to this invention. The number of pairs of the pole pieces can be appropriately changed as necessary, for example, according to specifications of the electric motor.

The pole pieces 133, 134 have respective rotator opposed surfaces 133a, 134a which are opposed to the rotator 120 or the housing part 132, and inner-wall opposed surfaces 133b, 134b which are formed on the side opposite to the rotator opposed surfaces 133a, 134a and opposed to an inner wall 131a of the stator core 131. Therefore, in this construction, a space for installing a winding 137 is formed in the form of a slot 135 between the inner wall 131a of the stator core 131 and the inner-wall opposed surfaces 133b, 134b of the pole pieces 133 and 134. The rotator opposed surfaces 133a, 134a, the inner-wall opposed surfaces 133b, 134b and the slot 135 are features that correspond to the "rotor opposed surfaces", the "inner-wall opposed surfaces" and the "slot", respectively, according to this invention.

Each of the pole pieces 133 has a base (proximal end) 133c contiguous to the inner wall 131a of the stator core 131 and a tip end (protruding end) 133d which faces away from the inner wall 131a on the side opposite to the base 133c. Similarly, each of the pole pieces 134 has a base (proximal end) 134c contiguous to the inner wall 131a of the stator core 131 and a tip end (protruding end) 134d which faces away from the inner wall 131a on the side opposite to the base 133c. In this construction, the tip ends 133d, 134d of the pole pieces 133, 134 adjacent to each other are spaced apart from each other via a predetermined space 138. The space 138 is defined as a space formed between the slot 135 and the housing part 132 of the stator core 131, and particularly, as shown in FIG. 3, it is defined as a space separate from the slot 135 and formed on a straight or curved line connecting the tip ends 133d, 134d of the pole pieces 133, 134. Therefore, the space 138 allows the winding 137 (also referred to as a "coil" or a "coil winding") to be inserted into the slot 135, and the winding 137 inserted via this space 138 is disposed in the slot 135. The winding 137 and the space 138 are features that correspond to the "winding" and the "space", respectively, according to this invention.

A first insulating sheet 141 is provided in the slot 13 5 for insertion of the winding 13 7. The first insulating sheet 141 is disposed in the slot 135 and wrapped around the winding 137 and covers it in the slot 135. Thus, the first insulating sheet 141 serves to insulate the winding 137 from the stator core 131. The first insulating sheet 141 is typically a sheet-like insulating paper (sheet member) and placed at least on the inner wall 131a of the stator core 131 and the inner-wall opposed surfaces 133b, 134b ofthe pole pieces 133, 134. The first insulating sheet 141 is a feature that corresponds to the "first insulating sheet" and the "first sheet member" according to this invention.

In this construction, the first insulating sheet 141 is arranged such that one end of the first insulating sheet 141 or a first end 141a slightly protrudes from the tip end 133d of the pole piece 133 into the space 138 and faces the space 138, while the other end of the first insulating sheet 141 or a second end 141b slightly protrudes from the tip end 134d of the pole piece 134 into the space 138 and faces the space 138. The first and second ends 141a, 141b of the first insulating sheet 141 are features that correspond to the "ends" according to this invention. Thus, insulation between the winding 137 and the inner wall 131a of the stator core 131 and insulation between the winding 137 and the pole pieces 133, 134 are secured.

Further, in the stator 130 of this embodiment, a second insulating sheet 142 is provided in the space 138. The second insulating sheet 142 is connected to the rotator opposed surfaces 133a, 134a of the pole pieces 133, 134 and serves to secure a predetermined insulation distance between the stator 130 and the rotor 120. Specifically, by provision of the second insulating sheet 142, a predetermined insulation distance is secured between the winding 137 in the slot 135 and the rotor 120 housed within the housing part 132 of the stator core 131. The second insulating sheet 142 is typically the same sheet-like insulating paper (sheet member) as the first insulating sheet 141. The second insulating sheet 142 is a feature that corresponds to the "second insulating sheet" and the "second sheet member" according to this invention.

One end of the second insulating sheet 142 or a first end 142a is bonded to the first end 141 a of the first insulating sheet 141 which protrudes to face the space 138, and the other end or a second end 142b is bonded to the second end 141b of the first insulating sheet 141 which protrudes to face the space 138. More specifically, the first end 142a ofthe second insulating sheet 142 is bonded to a surface of the first end 141a of the first insulating sheet 141 which faces the space 13 8 (or the rotor 120), and similarly, the second end 142b of the second insulating sheet 142 is bonded to a surface of the second end 141b of the first insulating sheet 141 which faces the space 138 (or the rotor 120). By thus using the existing first insulating sheet 141 as a joint of the second insulating sheet 142, the structure of the stator 130 can be made simpler. Further, the second insulating sheet 142 which is provided as a sheet separate from the first insulating sheet 141 can be retrofitted, which is advantageous in manufacturing.

As for bonding of the second insulating sheet 142, although not shown, a thermal fusion bonding layer is provided on a surface of the second insulating sheet 142 which faces the first insulating sheet 141, so that the second insulating sheet 142 can be thermally fusion bonded to the first insulating sheet 141. With such a construction, the second insulating sheet 142 can be easily bonded to the first insulating sheet 141 by thermal fusion bonding. Alternatively or in addition to thermal fusion bonding, other bonding methods, for example, using an adhesive or adhesive tape, may also be used.

With the above-described construction, in order to secure an insulation distance between the winding 137 in the slot 135 and the rotor 120 housed within the housing part 132 of the stator core 131, the second insulating sheet 142 is disposed in the space 138 such that no part of the second insulating sheet 142 is disposed in the slot 135. Therefore, decrease of a region of the slot 135 in which the winding 137 can be installed can be prevented.

Thus, the winding 137 can be installed in the entire region of the slot 135, so that the space efficiency of the winding 137 in the slot 135 can be enhanced. Thus, compared with the construction, for example, in which the second insulating sheet 142 is disposed in the slot 135, this construction can be effective in providing a higher-powered (higher specification) electric motor by installing the winding 137 in a region ofthe slot 135 which is occupied by the second insulating sheet 142 in the comparative example. Further, if the same amount of the winding 137 is used, this construction can be effective in reducing the size and weight of the electric motor by reducing the capacity of the slot 135 by the region required for installing the second insulating sheet 142 in the slot 135.

As for the above-described space efficiency, specifically, assuming that the space efficiency is 100% when a sheet member itself corresponding to the second insulating sheet 142 is not provided, the space efficiency can be increased to 130% by provision ofthe construction ofthe stator 130 shown in FIG. 3. Further, assuming that the space efficiency is 100% when a sheet member corresponding to the second insulating sheet 142 is provided in the slot as disclosed in the above-described prior art, the space efficiency can be increased to 108% by provision of the construction of the stator 130 shown in FIG. 3.

### (Other Embodiments)

The invention is not limited to the above embodiments, but rather, may be added to, changed, replaced with alternatives or otherwise modified. For example, the following provisions can be made in application of the above-described embodiment.

In the above-described embodiment, the first insulating sheet 141 and the second insulating sheet 142 are described as being formed as separate sheet members, but they may be integrally formed with each other, so that the insulating structure can be simplified by reduction of the number of the insulating sheets. In this case, for example, in the stator 130 shown in FIG. 3, the both ends 141a, 141b of the first insulating sheet 141 extend from the slot 135 to the space 138 and are bonded in the space 138.

Further, in the above-described embodiment, the stator 130 is described as being configured such that the second insulating sheet 142 is bonded to the first insulating sheet 141, but in the invention, the second insulating sheet 142 may be bonded to a place other than the first insulating sheet 141, which can be variously changed as necessary. For example, the second insulating sheet 142 may be bonded directly or indirectly (via a separate member) to the pole pieces 133, 134 or the stator core 131.

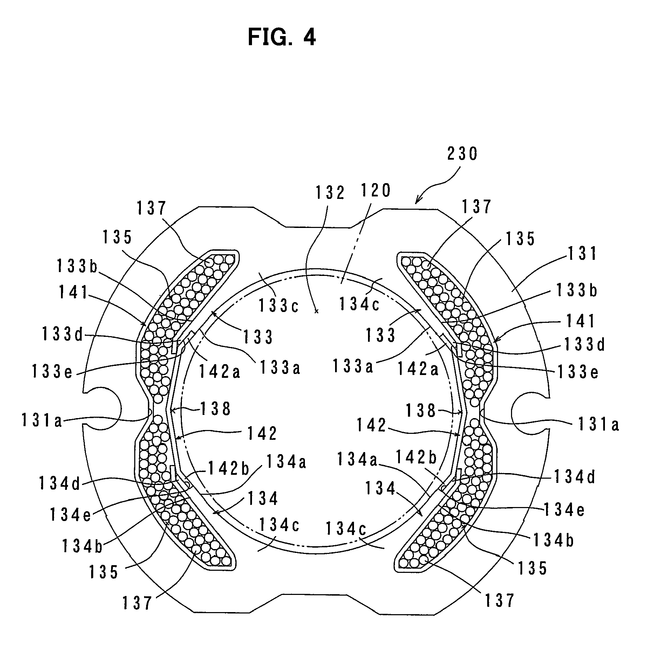

As one example, a stator 230 of another embodiment shown in FIG. 4 can be applied. In the stator 230 shown in FIG. 4, components or elements which are substantially identical to those shown in FIG. 3 are given like numerals. In the stator 230 which corresponds to the "stator" in the invention, a recess 133e is formed in the tip end 133d of the pole piece 133, and similarly, a recess 134e is formed in the tip end 134d of the pole piece 134. The recesses 133e, 134e are formed in the rotor opposed surfaces 133a, 134a of the pole pieces 133, 134 and form part of the space 138. Typically, the recesses 133e, 134e can be formed by machining the rotor opposed surfaces 133a, 134a of the pole pieces 133, 134. The recesses 133e, 134e are features that correspond to the "recesses" according to this invention.

In this construction, the first end 142a of the second insulating sheet 142 is bonded to the recess 133e of the pole piece 133, and similarly, the second end 142b of the second insulating sheet 142 is bonded to the recess 134e of the pole piece 134.

As described above, in the stator 230 of the second embodiment, as in the case of the stator 130 of the first embodiment, an insulation distance between the winding 137 in the slot 135 and the rotor 120 can be secured without reducing a region of the slot 135 of the stator core 131 in which the winding 137 is installed. As for the space efficiency of the winding 137 in the slot 135, the same space efficiency as in the above-described stator 130 can also be obtained in the stator 230. The structure of the stator 230 can be made simpler by using the existing pole pieces 133, 134 (the recesses 133e, 134e) as a joint of the second insulating sheet 142. Further, by providing a thermal fusion bonding layer on a surface of the second insulating sheet 142 which faces the recesses 133e, 134e of the pole pieces 133, 134, the second insulating sheet 142 can be easily bonded to the pole pieces 133, 134.

Further, according to the invention, following aspects are also provided.

The electric motor wherein the first and second insulating sheets are integrally formed as one sheet member. With this construction, the insulating structure can be simplified by reduction of the number of the insulating sheets.

The electric motor, wherein the second sheet member includes an adhesive or adhesive tape for bonding." With this construction, a structure for bonding the second sheet member by using an adhesive or adhesive tape can be realized.

A power tool including a tool bit for performing a predetermined operation on a workpiece, an electric motor, and a power transmitting mechanism for transmitting a rotating output of the electric motor to the tool bit, wherein the electric motor includes a cylindrical stator core fixed to a motor housing, a rotor rotatably housed within a housing part in a bore of the stator core, pole pieces extending from an inner wall of the stator core, rotor opposed surfaces of the pole pieces which are opposed to the rotor, inner-wall opposed surfaces of the pole pieces which are formed on a side opposite to the rotor opposed surfaces and opposed to the inner wall of the stator core, a slot which is defined between the inner wall of the stator core and the inner-wall opposed surfaces of the pole pieces and in which the winding is installed, a first insulating sheet which is disposed in the slot and insulates the winding from the stator core, a space which is defined between the slot with the winding installed therein and the housing part with the rotor housed therein, and a second insulating sheet which is disposed in the space and insulates the winding from the rotor.
With this construction, a power tool is provided with the electric motor which can secure an insulation distance between the winding and the rotor without reducing a region of the slot of the stator core in which the winding is installed.

Further, in the above embodiments, the invention is described as being applied to the construction of the electric motor to be installed in an electric disc grinder, but it may also be applied to electric motors to be installed in other power tools or electric equipment other than a power tool.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### Description of Numerals

- 101: electric disc grinder
- 103: body
- 105: motor housing
- 107: gear housing
- 107a: power transmitting mechanism
- 108: grinding wheel
- 109: main handle
- 110: electric motor
- 120: rotor
- 13 0: stator
- 131: stator core
- 131a: inner wall
- 132: housing part
- 133,: 134 pole piece
- 133a, 134a: rotor opposed surface
- 133b,: 134b inner-wall opposed surface
- 133c, 134c: base
- 133d,: 134d tip end
- 133e, 134e: recess
- 135: slot
- 137: winding
- 138: space
- 141: first insulating sheet
- 141a: first end
- 141b: second end
- 142: second insulating sheet
- 142a: first end
- 142b: second end
- 230: stator

## Claims

1. An electric motor comprising:
a cylindrical stator core (131) fixed to a motor housing,
a rotor (120) rotatably housed within a housing part in a bore of the stator core (131),
pole pieces (133, 134) extending from an inner wall of the stator core (131),
rotor (120) opposed surfaces of the pole pieces (133, 134) which are opposed to the rotor,
inner-wall (131a) opposed surfaces of the pole pieces (133, 134) which are formed on a side opposite to the rotor (120) opposed surfaces (133a, 134a) and opposed to the inner wall (131a) of the stator core (131),
a slot (135) which is defined between the inner wall (131a) of the stator core (131) and the inner-wall opposed surfaces (133b, 134b) of the pole pieces (133, 134) and in which the winding (137) is installed,
a first insulating sheet (141) which is disposed in the slot (135) and insulates the winding (137) from the stator core (131),
a space (138) which is defined between the slot (135) with the winding (137) installed therein and the housing part with the rotor (120) housed therein, and
a second insulating sheet (142) which is disposed in the space (138) and insulates the winding (137) from the rotor (120).

2. The electric motor as defined in claim 1, wherein the first and second insulating sheets (141, 142) are formed as separate sheet members.

3. The electric motor as defined in claim 1 or 2, wherein the first insulating sheet (141) in the form of a first sheet member is wrapped around the winding (137) in the slot (135), and in this state, ends of the first sheet member protrude in such a manner as to face the space (138), and the second insulating sheet (142) in the form of a second sheet member is bonded to sides of the ends of the first sheet member which face the space (138).

4. The electric motor as defined in claim 2 or 3, wherein a recess is formed in the rotor opposed surface (133a, 134a) of each of the pole pieces (133, 134) and forms part of the space (138), and the second insulating sheet (142) in the form of the second sheet member is bonded to the recess.

5. The electric motor as defined in claim 3 or 4, wherein the second sheet member includes a thermal fusion bonding layer for bonding.

6. The electric motor as defined in claim 1, wherein the first and second insulating sheets (141, 142) are integrally formed as one sheet member.

7. The electric motor as defined in claim 3 or 4, wherein the second sheet member includes an adhesive or adhesive tape for bonding.

8. A power tool comprising the electric motor as defined in any one of claims 1 to 7 to perform a predetermined working operation by the electric motor.
